# EUROPÄISCHE PATENTANMELDUNG

(11) **EP 1 084 911 A1**
(43) Veröffentlichungstag der Anmeldung: **21.03.2001**
(21) Anmeldenummer: 99890297.7
(22) Anmeldetag: 15.09.1999
(51) Int. Cl.: B60R 16/02

(54) **Elektrischer Leiterkreis**

(71) Anmelder: Gietzen, Rudolf, 71229 Leonberg (DE)
(72) Erfinder: Gietzen, Rudolf, 71229 Leonberg (DE)
(74) Vertreter: Patentanwälte BARGER, PISO & PARTNER

(57) **Zusammenfassung**

Die Erfindung betrifft einen Folienabschnitt, bestehend aus einem Streifen eines Flachkabels, einer sogenannten FFC und ist dadurch gekennzeichnet, daß der Streifen Fenster in der Isolierung und/oder einen Längsschlitz und/oder ein abisoliertes Ende, gegebenenfalls einen Stecker und/oder Markierungen sowie eine Endmarkierung (7) aufweist und daß der Streifen zumindest eine Faltung (21) und/oder Stufe und/oder Biegung aufweist.

Die Erfindung betrifft auch ein Verfahren zur Herstellung eines solchen Folienabschnittes und ist dadurch gekennzeichnet, daß ein Rohling (5), der Fenster und/oder einen Längsschlitz und/oder ein abisoliertes Ende, gegebenenfalls einen Stecker und/oder eine Markierung aufweist, in seinem einen Endbereich gehalten und über ein Faltlineal (15), das gegebenenfalls schräg zur Längsrichtung des Rohlings angeordnet ist, gefaltet wird, bis die beiden Schenkel des Rohlings im wesentlichen in der gleichen Ebene verlaufen, wobei ein stabförmiger Radiushalter (14), der vom Faltlineal (15) gehalten wird, zwischen den beiden Schenkeln elastisch eingeklemmt wird.

## Beschreibung

Üblicherweise werden die einzelnen elektrischen Verbraucher eines Kraftfahrzeuges mittels sogenannter Kabelbäume versorgt. Diese Kabelbäume gehörten zu den wenigen Bestandteilen zeitgenössischer Kraftfahrzeuge, die noch in Handarbeit hergestellt werden. Dazu werden auf großformatigen Brettern, in die massive Nägel teilweise eingeschlagen sind und teilweise über die Brettoberfläche hervorstehen, einzelne Kabeln oder vorbereitete Kabelstücke passend angeordnet, fixiert und sodann mit entsprechenden Verbindungselementen untereinander verbunden, bis ein Gebilde entstanden ist, das entfernt an einen Baum samt Wurzeln erinnert, woher auch der Name Kabelbaum stammt.

Ursprünglich wurden im Kraftfahrzeugbau die metallischen Teile des Kraftfahrzeugs als Masse verwendet und es wurde den einzelnen Verbrauchern nur der Strom zugeführt, der Kreis wurde über die Masse geschlossen. Seit längerem ist man mehr und mehr davon abgegangen und führt den elektrischen Verbrauchern den Strom nicht nur über eine stromführende Leitung zu, sondern führt den Strom über Kabel gesondert von der Masse wieder ab.

Eine weitere Tendenz besteht darin, eine ganze Reihe von Verbrauchern ähnlich wie die Heizkörper eines Zentralheizungssystems zwischen der Stromzu- und rückfuhr anzuordnen und jeden Verbraucher an Ort und Stelle zu schalten, wobei die dazu notwendigen Schaltbefehle über einen zweipoligen Datenbus (CAN) (Zweipoliges Kabel) übermittelt werden, die zu jedem derartigen Verbraucher geführt wird, und wobei jeder Verbraucher mittels entsprechender logischer Bausteine die ihn betreffenden Informationen erkennt und interpretiert und in Abhängigkeit davon den Ruhezustand (Strom aus) oder den Aktivzustand (Strom ein) einnimmt.

Es ist trotz all dieser Versuche einer Vereinfachung und Erleichterung der Handhabbarkeit ein Nachteil unbeseitigt geblieben, der jedem Kabel inherent ist:
Dies ist die Biegeweichheit in zwei Dimensionen, die es unmöglich macht, derartige Kabelabschnitte, wie sie die Kabelbäume nun einmal aufweisen von den derzeit bestehenden Handhabungsmaschinen (Robotern) im Zuge der KFZ-Herstellung in ein KFZ einbaubar zu machen. Es ist daher notwendig, daß nicht nur die Herstellung der Kabelbäume sondern auch deren Verlegung im Kraftfahrzeug so gut wie vollständig manuell erfolgt.

Zu all dem kommt noch, daß es in einem zeitgenössischen Kraftfahrzeug nicht nur eine große Anzahl elektrischer Verbraucher gibt, die mit Strom und Steuersignalen versorgt werden müssen, sondern auch eine früher ungeahnte Anzahl an Sensoren, die ihre Meßergebnisse in elektrischer Form zur Verfügung stellen und an entsprechende Steuer-, Regelund Rechenvorrichtungen weiterleiten müssen. Es sei dabei nur an die Schlupf- und Traktionsregelung, an die Außenthermometer zur Warnung vor eventuellem Glatteis, an die Satellitennavigationsinstrumente, an fix eingebaute Telefoneinrichtungen, vereinzelt an Sensoren zur Überwachung der Temperatur und des Luftdrucks von Reifen, der Abnutzung von Bremsbelägen und dergleichen mehr gedacht. Dies bedeutet, daß selbst bei konsequenter Verfolgung der Versorgung der Verbraucher mit einer zweipoligen Energieversorgung und einer zweipoligen Informationsversorgung die Probleme der elektrischen Verkabelung im Kraftfahrzeug auch nicht annähernd gelöst werden können.

Die Erfindung zielt darauf ab, diese Probleme wesentlich zu reduzieren und in letzter Konsequenz zu eliminieren und macht sich dabei die Eigenschaft sogenannter Flachkabel zunutze, in nur einer Richtung, normal zu ihrer Längserstreckung und normal zu ihrer Ebene, biegeweich zu sein und auch in dieser Richtung wesentlich steifer zu sein als übliche Kabel. Derartige Flachkabel, sogenannte FFC (**F**lexible **F**lat **C**ontactors) weisen mehrere elektrische Leiter, zumeist aus Kupfer auf, die parallel zueinander angeordnet sind und zwischen zumindest zwei Schichten aus elektrisch isolierendem, biegeweichen Kunststoffmaterial eingebettet, zumeist eingeschweißt, sind. Es können dabei die Leiter identischen oder unterschiedlichen Querschnitt aufweisen und es können auch mehr als nur die zwei zwischen den Leitern miteinander verschweißten Deckschichten vorgesehen sein, um beispielsweise Markierungen oder zusätzliche Isolationseigenschaften zu vermitteln.

Wesentlich ist, daß derartige FFCs mittels Automaten relativ einfach handhabbar sind und daß auch das Anbringen von Steckern an den Enden der FFCs und das Verbinden dieser Stecker miteinander automatisierbar ist. Es haben allerdings derartige FFCs bisher in der KFZ-Branche keinen Eingang gefunden, da es keine Möglichkeit gegeben hat, derartige FFCs zu den relativ komplizierten Formen, die sie im Kraftfahrzeug einnehmen müssen, zu verarbeiten. Es werden derartige FFCs zur Verbindung von Leiterplatten oder elektrischen Verbrauchern mit Versorgern verwendet, wobei sie eine gewisse Überlänge für die Erleichterung der Handhabung und zur Zugentlastung aufweisen und ansonsten nur an jedem Ende mit einem passenden Stecker versehen sind.

Es ist nun das Kemanliegen der Erfindung, Verfahren zur Verfügung zu stellen, die eine solche Bearbeitung bzw. Verarbeitung ermöglichen, wodurch zumindest in weiten Bereichen nicht nur die händische Herstellung von Kabelbäumen entfällt, sondern auch der Einbau der elektrischen Leiter automatisiert werden kann. Dazu ist in zwei Schritten folgendes vorgesehen:
In einem ersten Schritt werden aus der Endlosware bzw. aus grob abgeleängten Stücken der FFC Rohlinge gefertigt, die jeweils aus einem Strang bestehen, der bereits die endgültige Länge aufweist und an den notwendigen Stellen mit Fenstern in der Isolierung, somit blank liegenden Leitern und zumindest einer Endmarkierung zur Identifikation versehen ist und unter Umständen an den Enden bereits Stecker oder absolierte Bereiche aufweist. Die weiteren Markeirungen können in der Folge zur Erleichterung der Positionierung des Rohlings verwendet werden.

In einem zweiten Schritt werden die Rohlinge, noch jeder für sich, in die notwendige Form gebracht. Dazu werden durch Faltungsschritte die notwendigen Biegungen hergestellt und es kann, wenn dies notwendig sein sollte, den so hergestellten Folienabschnitten auch eine entsprechende Krümmung aus der Ebene erteilt werden.

Schließlich wird in einem dritten Schritt aus zumindest zwei derartigen Folienabschnitten ein Einbauteil gefertigt. Dazu werden zumindest zwei Rohlinge so übereinander gelegt, daß die Fenster der Leiter, die miteinander verbunden werden sollen fluchtend zueinander zu liegen kommen und es werden die Leiter sodann auf passende Weise (beispielsweise durch Ultraschallschweißen) miteinander verbunden. Dieser Schritt kann, gegebenenfalls nach erfolgter Aufbringung einer Isolierung, um das Auftreten von Kriechströmen oder Masseschlüssen zu vermeiden, durch entsprechendes Anordnen eines dritten, vierten oder weiteren Rohlings wiederholt werden, bis zu guter letzt ein fertiger Einbauteil entstanden ist.

Dieser Einbauteil ist aufgrund seiner Herstellungsweise zwar im wesentlichen zweidimensional aber keinesfalls notwendigerweise eben ausgebildet. Es können die Krümmungen, die notwendig sind um beispielsweise die Einbauteile den Krümmungen des Dachhimmels oder der Türinnenseite anzupassen, durchaus erhalten werden. Zu bedenken ist dabei nur, daß die FFCs sich an zylindrische bzw. kegelige, somit an parabolisch gekrümmte Flächen anpassen lassen, nicht aber an elliptisch oder hyperbolisch gekrümmte Flächen.

Es werden die drei Verarbeitungsschritte vorteilhafterweise an drei verschiedenen Bearbeitungsstationen vorgenommen, wobei im ersten Schritt die passende Ablängung der FFCs, die Schaffung der Fenster und das Anbringen eventueller Schlitze zwischen einzelnen ihrer Adern erfolgt und auch, was für die Weiterverarbeitung wichtig ist, zumindest eine Markierung aufgebracht wird, die der Identifizierung des so geschaffenen Rohlings dient, während im zweiten Schritt auf einer anderen Station die Formgebung des einzelnen Rohlings durch Falten und gegebenenfalls Biegen erfolgt. Dieser zweite Schritt läßt sich in gewisser Weise entfernt mit der Bearbeitung von Blechstücken auf einer Abkantpresse oder einer Blechrollmaschine vergleichen, da auch beim erfindungsgemäßen Verfahren eine sukzessive Schaffung der einzelnen Faltungen bzw. der einzelnen Biegevorgänge jeweils um eine Achse erfolgt.

Im dritten Schritt schließlich, in dem die Verbindung mehrerer solcher Folienabschnitte bewerkstelligt wird, ist die genaue Positionierung der einzelnen Folienabschnitte und die Abfolge ihrer Verbindung wesentlich, doch ist dieser auf den heutigen Handhabungsvorrichtungen mit den in der KFZ-Technik einzuhaltenden Toleranzen durchaus beherrschbar.

Die Erfindung wird im folgenden an Hand der Zeichnung näher erläutert. Dabei zeigt
die Fig. 1 einen erfindungsgemäßen Tisch zur Konfektionierung eines Rohlings aus einer FFC,

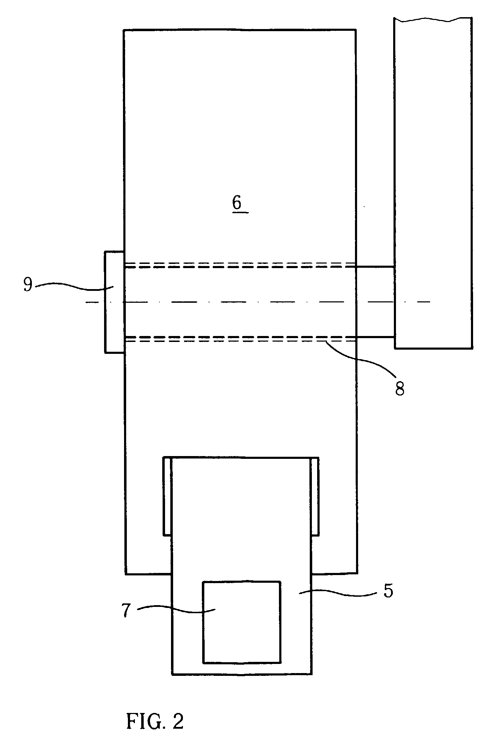

die Fig. 2 eine Spule mit einem darin aufgewickelten Rohling und
die Fig. 3 einen erfindungsgemäßen Tisch zur Schaffung eines Folienabschnittes aus einem Rohling.

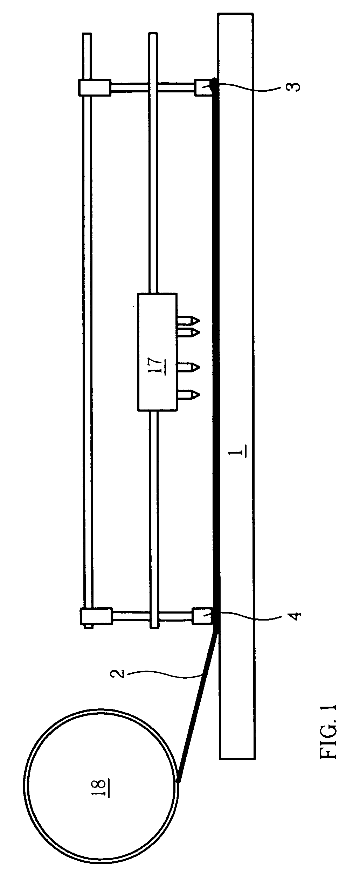

Die erste erfindungsgemäße Vorrichtung, mit der die Konfektionierung erfolgt, besteht, wie aus Fig. 1 ersichtlich ist, im wesentlichen aus einem Tisch 1, auf dem die zu bearbeitende FFC 2 von einer Vorratsspule 18 im Zuge des Abziehens von dieser Vorratsspule mittels eines Greifers 3 in Längsrichtung aufgelegt wird. Wenn die gewünschte Länge erreicht ist, wird die FFC auf der Spulenseite mittels eines Halters 4, der entweder Teil des Greifers 3 ist, oder auch ein Teil des Tisches 1 sein kann, oder von beiden unabhängig ist, fixiert. Es ist auch möglich, daß die FFC bereits in (zumeist mit einem gewissen Übermaß) abgelänger Form vorliegt, der Greifer 3 muß dann nur zu deren Ergreifen adaptiert sein, der Bearbeitungsvorgang selbst bleibt gleich.

Um zu einer exakten Lage und der genauen Länge der unter Umständen durch die vorherige Lagerung noch nicht genau eben (gestreckt) angeordneten FFC 2 zu kommen, kann durch Ausüben einer vorbestimmten Zugkraft die FFC 2 vor dem endgültigen Fixieren am Tisch 1 gestreckt werden.

Sodann werden mittels passender Werkzeuge, die im gezeigten Ausführungsbeispiel gemeinsam in einer Bearbeitungsvorrichtung 17 anmgeordnet sind, die vorbestimmten Markierungen an der FFC 2 angebracht, es werden, beispielsweise mittels eines Lasers, eines Plasmastrahls oder mechanisch durch Fräsen oder andere Methoden, die Leiter der FFC 2 an den vorbestimmten Stellen freigelegt (Fenster), es werden, wenn gewünscht, an vorbestimmten Stellen Längsschnitte zwischen den Leitern vorgenommen, um beispielsweise später Abzweigungen bilden zu können, und es werden gegebenenfalls die Enden (oder auch nur eines) der FFC 2 mit Steckern oder mit abisolierten Bereichen versehen. Dazu ist es möglich oder notwendig, daß der Greifer 3 die FFC 2 freigibt, während der Halter 4 von Haus aus so angeordnet sein kann, daß das in seinem Bereich befindliche Ende der FFC 2 frei zugänglich ist. Um in jedem Fall die FFC 2 entsprechend festzuhalten, ist in diesem Fall zumindest ein weiterer Halter im entsprechenden Endbereich der FFC 2 vorzusehen, der die Fixierung übernimmt, wenn der Greifer 3 und/oder der Halter 4 die FFC freigibt. Wesentlich ist, daß zumindest in einem Endbereich der FFC 2 eine Endmarkierung 7 angeordnet wird, die eine spätere Identifikation der FFC 2 ermöglicht. Die so konfektionierte FFC wird als Rohling 5 bezeichnet. Im dargestellten Beispiel werden nur Fenster von oben in der Isolierung angebracht, es ist selbverständlich möglich, derartige Fenster und/oder Markierungen auch auf der Unterseite der FFC vorzusehen.

Die Endmarkierung 7 kann durch Aufbringen von Farbe, das Aufkleben einer Ettikette (bar-code), das Anbringen einer magnetischen Markierung, eines Transponders oder ähnlichem gebildet werden, es ist dabei nur auf die Haltbarkeit, die Interpretierbarkeit und die Kosten zu achten.

Für das weitere Vorgehen gibt es mehrere Möglichkeiten:
Bevorzugt wird die sofortige anschließende Weiterverarbeitung, wie sie weiter unten beschrieben wird. Im Falle einer Zwischenlagerung besteht die Möglichkeit, den Rohling 5 hängend zu lagern. Dazu wird ein Ende des Rohlings 5 von einem nicht dargestellten Greifer erfaßt und mit diesem Greifer in das Zwischenlager verbracht. Dazu kann der Greifer beispielsweise entlang einer Tragschiene verfahrbar angeordnet sein. Im Zwischenlager können die Greifer dicht an dicht angeordnet sein oder auch den Rohling 5 an eine spezielle Lagerhalterung übergeben. Derartige Vorrichtungen sind aus der industriellen Fertigung bekannt und bedürfen hier keiner weiteren Erläuterung. Wesentlich ist aber dabei, daß die Endmarkierung 7 am Rohling 5 schnell und zuverläßig ablesbar ist, um eine übersichtliche Lagerung und einen schnellen Zugriff zu erlauben. Es wird daher bevorzugt, daß der Greifer bzw. die Lagerhalterung den Rohling 5 an dem der Endmarkierung 7 benachbarten Ende ergreift, da so die Lage und damit die Zugänglichkeit der Endmarkierung 7 definiert ist.

Eine andere Form der Zwischenlagerung besteht in der Unterbringung des Rohlings 5 in aufgerollter Form in einer passenden zylindrischen Kassette 6. Dabei ist wesentlich, daß das Ende des Rohlings, das die Endmarkierung 7 trägt, ein Stück aus der Kassette 6 ragt, um die Endmarkierung 7 leicht und zuverläßig ablesen (und auch ergreifen) zu können. In einer Variante befindet sich die Endmarkierung 7 geschützt in der Kassette, ist aber durch das Kassetttengehäuse ablesbar (beispielsweise magnetisch). Die Kassetten 6 können in Schränken od.dergl., die als Zwischenlager dienen, gelagert werden. Bevorzugt weisen die Kassetten 6 eine zentrale Handhabe, vorteilhafterweise in Form einer Durchgangsöffnung 8, auf, in die Dorne 9 der weiteren Handhabungsautomaten passend eingeführt werden können. Im gezeigten Ausführungsbeispiel weist der Dorn 9 an seinem freien Ende radial verschiebliche Elemente auf, die die Kassette am Dorn festlegen, doch ist es selbverständlich möglich, diese Verbindung anders zu gestalten.

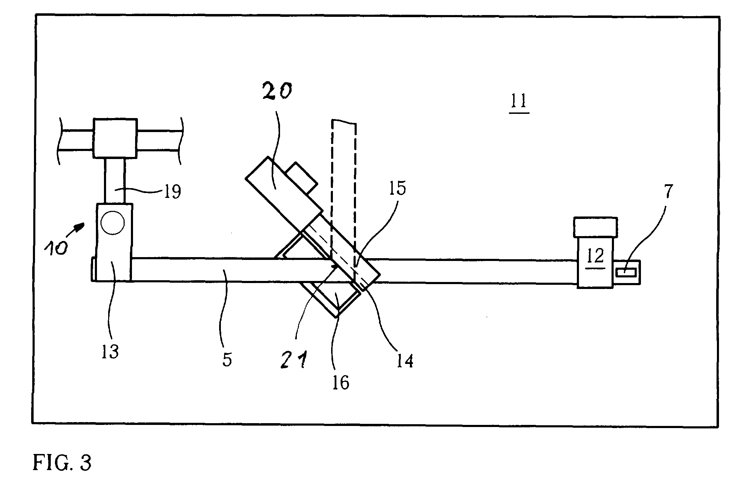

Die nächste erfindungsgemäße Bearbeitungsstation, die Faltungsstation, bringt nun die Rohlinge 5 in passende Form und ist in Fig. 3 schematisch dargestellt. Es wird im kommenden die Faltung von Rohlingen 5, die entweder direkt von der Konfektionierung oder von einem Hänge-Zwischenlager kommen, beschrieben. Die Faltung der in Kassetten 6 zwischengelagerten Rohlinge wird später erläutert. Mittels eines Greifers 10 werden die Rohlinge 5 einem Tisch 11 zugeführt, wobei sie im Bereich ihrer beiden Enden in gestreckter Lage gehalten werden. Nachdem Sie am Tisch in richtiger Position abgelegt sind, wird eines ihrer Enden am Tisch von einem Niederhalter 12, der Teil des Greifers 10 oder des Tisches 11 sein kann, fixiert. Das andere Ende des noch gestreckt am Tisch 11 liegenden Rohlings 5 wird nach wie vor vom Greifer 10 gehalten, diese Halterung wird im folgenden Manipulator 13 genannt.

Es wird nun an der Stelle des Rohlings 5, an der eine Faltung vorgenommen werden soll, ein Faltlineal 15 von der Seite her knapp oberhalb des Rohlings 5 über diesen geschoben, wobei es in einem Winkel zur Längsrichtung des Rohlings verläuft, der nach erfolgter Faltung den vorbestimmten Verlauf des FFC's in diesem Faltungsbereich bedingt. Bei einer 90°-Faltung beträgt dieser Winkel 45°. Mit dem Faltlineal 15 oder nach dessen Vorschub wird entlang einer passenden Nut dieses Faltungslineals ein Radiushalter 14 über die ganze Länge der zu bildenden Faltung vorgeschoben, der sicherstellt, daß beim Falten des Rohlings 5 ein vorgegebener Mindestkrümmungsradius eingehalten wird, um eine Beschädigung der Isolierung und/oder Leiter des FFC's zuverläßig zu verhindern. Dieser Radiushalter besteht bevorzugt aus einem passenden Kunststoffprofil, das von einer Spule 20, Haspel od.dergl. abgewickelt wird. Schließlich wird das Faltlineal samt dem Radiushalter nach unten bewegt und bildet so eine, allerdings nur mit mäßiger Kraft wirkende, Fixierung des Rohlings 5 im Bereich der kommenden Faltung.

Wenn das Faltungslineal 15 und der Radiushalter 14 an ihrem Platz sind, wird der Manipulator 13 entlang des Rohlings 5 in Richtung zum Niederhalter 13 bewegt, wobei er entweder etwas über die Tischebene gehoben wird, um die Bildung einer S-förmigen Schlaufe des Rohlings zu erlauben, oder er wird am Anfang der Bewegung um eine Achse 19 parallel zur Tischebene und normal zur Längsrichtung des Rohlings verdreht, um die Ausbildung einer halbkreisförmigen Schlaufe zu erlauben. Sodann erfolgt die Bewegung solange, bis die Schlaufe mit ihrer dem Tisch zugewandten Seite in den Bereich des Faltlineales 15 kommt.

Es erfolgt nun eine Bewegung des Manipulators 13 dergestalt, daß die bisher in einer Ebene normal zum Tisch und durch die Längsrichtung des Rohlings 5 liegende Schlaufe sich schräg zur Längsrichtung stellt, bis sie in ihren Höhenschichtlinien parallel zum Faltlineal 15 verläuft. Nun kann die Schlaufe "zugezogen" werden, was durch eine Falzplatte 16 beschleunigt und für die FFC schonender gestaltet wird, da statt bzw. zusätzlich zum Zug eine richtiggehende Biegekraft aufgebracht wird. Durch die Falzplatte 16 wird auch eine exakte Faltung erreicht, was für die weitere Verarbeitung des Rohlings wegen der richtigen Lage der bereits am Rohling angeordneten Fenster, Schlitze etc. wesentlich ist. Schließlich ist die Falzplatte 16 auch wichtig, um das endgültig erhaltene Foliennetzwerk in möglichst dünner Form zu erhalten.

Es wird nun der Radiushalter 14 knapp neben der gebildeten Falte durchtrennt und sodann das Faltlineal 15 zurückgezogen. Es kann selbverständlich auch zuerst das Faltlineal zurückgezogen und sodann der Radiushalter durchtrennt werdern. Das abgetrennte Stück des Radiushalters bleibt zum Schutz der Faltung in ihr. Um die Positionierung des Rohlings am Tisch 11 zu garantieren, kann die Falzplatte 16 während des Zurückziehens des Faltlineals und des Durchtrennen des Radiushalters nur teilweise entlastet werden, ohne noch vollständig vom Rohling 5 abgehoben worden zu sein. Schließlich wird auch die Falzplatte 16 vollständig abgehoben und, wie auch gegebenenfalls die gesamte Vorrichtung des Faltlineals 15 samt Radiushalter 14, aus dem Bereich der Faltung 21 gebracht, womit die Faltung beendet ist.

Wenn nun diese erste Faltung 21 erfolgt ist, verläuft der Abschnitt des Rohlings 5 zwischen dem Niederhalter 12 und zumindest ein Stück über diese erste Faltung hinaus bereits so, wie es endgültig vorgesehen ist. Wenn es sich um einen Folienabschnitt handelt, der nur eine Faltung aufweist, ist dieser fertig und kann, wie weiter unten beschrieben, vom Tisch 11 entfernt werden.

Um eine weitere Faltung des selben Rohlings 5 vorzunehmen, ist nur an passender Stelle zwischen der bereits erfolgten Faltung und dem Manipulator ein weiteres Faltlineal samt Radiushalter entsprechend vorzusehen und zu aktivieren, wobei Schritt für Schritt wie oben beschrieben zu verfahren ist. Es können auf diese Weise alle notwendigen Faltungen vorgenommen werden, die für den betrachteten Folienabschnitt vorgesehen sind.

Andere Manipulationen, die in diesem Faltungsabschnitt vorgenommen werden können sind beispielsweise das getrennte Falten von Rohlingsbereichen, die in Längsrichtung geschlitzt sind, wie dies weiter oben für Abzweigungen beschrieben worden ist. Dazu ist es notwendig, daß der Manipulator 13 zweigeteilt ist und daß beide Teile für die im ungeschlitzten Bereich des Rohlings liegenden Faltungen simultan bewegt werden. Eine andere Möglichkeit ist es, den Manipulator zu wechseln, doch ist eine solche Maßnahme immer riskant und stellt eine unangenehme Fehlerquelle sowohl im Ablauf der Fertigung als auch für die Einhaltung der vorgegebenen Toleranzen dar.

Wenn der Rohling 5 in einer Kassette 6 vorliegt, kann diese als Manipulator verwendet werden, wenn nur sichergestellt ist, daß das Ausgeben des Rohlings 5 erst bei einer gewissen Zugkraft erfolgt oder durch eine lösbare Bremse od.dergl. verhindert werden kann. Es ist in diesem Falle möglich, mit der ersten Faltung zu beginnen, ohne zuvor den Rohling in seiner ganzen Länge auf den Tisch 11 auszulegen, und auch in der Folge das Ausgeben aus der Kassette 6 mit dem fortschreitenden Falten abzustimmen.

Der Tisch 11 muß nicht völlig eben sein, sondern kann die Kontur des Fahrzeugteiles aufweisen, in dem der Folienabschnitt später eingebaut wird. Wesentlich ist aber dabei, daß darauf geachtet wird, daß die CCF's nur in einer Richtung gebogen werden können, also nicht "gebeult" werden können, ohne daß Beschädigungsgefahr besteht. Es können auf diese Weise Stufen, Rundungen oder Knicke aus der Ebene bzw. Hauptebene des Folienabschnittes geschaffen werden, die bei der Weiterverarbeitung bzw. dem Einbau wichtig sind. Derartige Stufen oder Knicke können durch Anpreßrollen oder bewegliche Tischteile, die ähnlich wie die Falzplatten 16, aber mit geringerem Schwenkwinkel als diese agieren, geschaffen werden. Selbverständlich ist dabei darauf zu achte, daß die Mindestkrümmungsradien eingehalten werden, um Beschädigungen der FFC zu vermeiden. Dies ist in Kenntnis der Erfindung durch entsprechenden Ausbildung der Formteile für die Stufen oder Knicke und der Anpreßelemente leicht möglich.

Wie eingangs ausgeführt, sind zumeist mehrere Folienabschnitte miteinander zu einem Einbauteil zu verbinden. Diese Verbindung hat sowohl mechanisch als auch elektrisch zu erfolgen und erfordert das lagegenaue übereinander Positionieren von jeweils zumindest zwei Folienabschnitten 17 auf einem Tisch, sodaß die freigelegten Kabelabschnitte übereinander zu liegen kommen, das Verschweißen, Verlöten, Verreiben etc der Leiter, gegebenenfalls die Wiederholung dieser Prozedur mit weiteren Folienabschnitten und schließlich oder auch nach jedem Schritt (oder nach einigen Schritten) das Aufbringen passenden Isolationsmaterials und Verbinden dieses Materials mit dem Folienmaterial der Folienabschnitte, bis schließlich der Einbauteil fertig ist.

Zu bedenken ist dabei, daß die Einbauteile, wie oben bezüglich der Rohlinge kurz ausgeführt, nicht unbedingt plan sein müssen, sondern durchaus bombiert oder gestuft ausgebildet sein können (Himmel, Türen, etc.). Dies bedingt, daß auch die Tische zur Schaffung der Einbauteile nicht unbedingt eben sind, sondern die passende Form aufweisen müssen. Dies ist aber in Kenntnis der Erfindung für den Fachmann auf dem Gebiete der FFC's durchaus zu meistern.

Die fertigen Einbauteile weisen durch ihre im wesentlichen zweidimensionale und an verschiedenen Stellen durch die Verschweissungen quasi-vernetzte Struktur eine ausreichende Steifigkeit auf, um mittels Handhabungsautomaten ergriffen und an passender Stelle im Auto eingebaut werden zu können. Es ist auch möglich, zur Erhöhung dieser Steifigkeit an Kreuzungsstellen, an denen kein elektrischer Kontakt hergestellt wird, die isolierende Außenhülle der benachbarten FFC's miteinander zu verbinden, beispielsweise zu verkleben oder zu verschweißen. Schließlich ist es auch möglich, passende Versteifungselemente, die auch Handhaben für die Manipulatoren aufweisen können und bevorzugt aus Kunststoff bestehen, in die Einbauteile miteinzubauen.

Auf diese Weise können z.Bsp. alle für eine Türe notwendigen Kabel von einer zentralen Zuleitung ausgehend mit einem einzigen Stecker mit einem vom Wagenkasten kommenden Kabel verbunden und so versorgt werden. Bei einer Fahrertüre kann es sich dabei um die Kabel für alle Fensterheber des Fahrzeuges handeln, für die Steuerung der Zentralverriegelung, die Beleuchtung der in der Tür befindlichen "Tür-Offen" Leuchte für nachkommende Fahrzeuge, der Signalleitungen für die "Tür-Offen" Anzeige am Armaturenbrett, Kabel für Lautsprecher und mehr.

Anders als bei herkömmlichen Verkabelungen mittels Kabelbäumen ist es bei der erfindungsgemäßen Verkabelung nicht notwendig, in Form von Ästen oder Wurzeln über die gesamte Länge eines Leiters möglichst ununterbrochen auszubilden, sondern es wird möglich, einzelne, im wesentlichen flächige Gebilde dann bei der KFZ-Herstellung zu montieren, wie dies beim jeweiligen Aufbauzustand günstig ist, und die einzelnen Einbauteile mit ihren jeweiligen Nachbarteilen einfach mitttels Steckern zu verbinden. Dies eröffnet ganz neue Vorgangsweisen bei der Fertigung.

## Patentansprüche

1. Folienabschnitt, bestehend aus einem Streifen eines Flachkabels, einer sogenannten FFC, dadurch gekennzeichnet, daß der Streifen Fenster in der Isolierung und/oder zumindest einen Längsschlitz und/oder zumindest ein abisoliertes Ende, gegebenenfalls versehen mit einem Stecker und/oder Markierungen sowie eine Endmarkierung (7) aufweist und daß der Streifen zumindest eine Faltung (21) und/oder Stufe und/oder Biegung aufweist.

2. Folienabschnitt nach Anspruch 1 mit einer Faltung (21), dadurch gekennzeichnet, daß im Faltungsbereich ein Radiushalter (14) zwischen den beiden Schenkeln des Folienabschnittes eingeklemmt ist.

3. Verfahren zur Herstellung eines Folienabschnittes nach Anspruch 1 mit einer Faltung, dadurch gekennzeichnet, daß ein Rohling (5), bestehend aus einem Streifen eines Flachkabels, einer sogenannten FFC, der Fenster in der Isolierung und/oder zumindest einen Längsschlitz und/oder zumindest ein abisoliertes Ende, gegebenenfalls versehen mit einem Stecker und/oder eine Markierung aufweist, in seinem einen Endbereich gehalten und über ein Faltlineal (15), das gegebenenfalls schräg zur Längsrichtung des Rohlings angeordnet ist, gefaltet wird, bis die beiden Schenkel des Rohlings im wesentlichen in der gleichen Ebene verlaufen, wobei ein stabförmiger Radiushalter (14), der vom Faltlineal (15) gehalten wird, zwischen den beiden Schenkeln elastisch eingeklemmt wird.

4. Verfahren nach Anspruch 3, dadurch gekennzeichnet, daß die Faltung auf einem Tisch (11) erfolgt, daß ein Endbereich des Rohlings (5) an Tisch mittels eines Niederhalters (12) fixiert ist und daß das Faltlineal (15) und der Radiushalter (14) von der Seite über den Rohling (5) geschoben werden, nachdem dieser in diesem Bereich ausgelegt ist, daß sodann der bewegliche Bereich des Rohlings im doppelten Winkel des Faltlineals über dieses zurückgeführt und die Faltung durch eine Klappbewegung einer Falzplatte (16) um eine Achse parallel zum Faltlineal (15) vervollständigt wird.

5. Verfahren zur Herstellung eines Folienabschnittes nach Anspruch 1 mit einer Biegung, dadurch gekennzeichnet, daß der Rohling (5) um eine abgerundete Kante des Tisches (11) geführt und mitttels einer Rolle, deren Drehachse parallel zur Kantenachse verläuft, an die Kantenform angepreßt und plastisch deformiert wird.

6. Verfahren zur Herstellung eines Einbauteiles aus zumindest zwei Folienabschnitten, dadurch gekennzeichnet, daß die Folienabschnitte in einer Form mit zueinander gewandten, fluchtenden Fenstern in der Isolierung positioniert werden und die freiliegenden Leiter elektrisch miteinander verbunden werden, beispielsweise durch Ultraschallschweißen, daß gegebenenfalls weitere Folienabschnitte mit dem so geschaffenen Gebilde auf gleiche Weise verbunden werden und daß zumindest abschließend eine elektrische Isolierung im Bereich der Fenster aufgebracht wird.
